# EUROPEAN PATENT APPLICATION

(11) **EP 1 860 156 A1**
(43) Date of publication of application: **28.11.2007**
(21) Application number: 06729021.3
(22) Date of filing: 14.03.2006
(51) Int. Cl.: C08L 79/08, C08K 3/16, C08L 27/12, C08L 27/18, F04B 39/00, F04C 18/02, F16C 33/20

(54) **COMPOSITION FOR SLIDE MEMBER, SLIDE MEMBER AND FLUID MACHINERY**

(30) Priority: 16.03.2005 JP 2005075475
(71) Applicant: DAIKIN INDUSTRIES, LTD., Osaka-shi, Osaka 530-8323 (JP)
(72) Inventor: OHKAWA, Takeyoshi, Kanaoka Factory, Sakai Plant, Sakai-shi, Osaka, 5918511 (JP); INOMOTO, Hisashi, Kanaoka Factory, Sakai Plant, Sakai-shi, Osaka, 5918511 (JP); KINOSHITA, Takuya c/o Yodogawa Plant,, Settsu-shi, Osaka, 5668585 (JP); MIKAME, Daisuke c/o Yodogawa Plant,, Nishihitotsuya, Settsu-shi, Osaka, 5668585 (JP); TAKEDA, Nobuaki c/o Yodogawa Plant,, Nishihitotsuya, Settsu-shi, Osaka, 5668585 (JP)
(74) Representative: Goddar, Heinz J.
(86) International application number: PCT/JP2006/304968
(87) International publication number: WO 2006/098303

(57) **Abstract**

A scroll compressor (10) includes a lubrication part (70) provided at a sliding part between a cylindrical part (26) of a slide bush (25) and an extension (53) of a movable scroll (50). The lubrication part (70) has a coating formed on the surface of an iron substrate and the coating is made of a composition for a sliding element containing polytetrafluoroethylene, 300 parts by weight of polyamide-imide resin per 100 parts by weight of polytetrafluoroethylene and 100 parts by weight of calcium fluoride as a wear resistant agent per 100 parts by weight of polytetrafluoroethylene.

## Description

### Technical Field

This invention relates to compositions for use in sliding elements, sliding elements and fluid machines.

### Background Art

Most machines currently used employ sliding elements, such as bearings or pistons. Such a sliding element is required to have not only necessary mechanical strength but also slidability or wear resistance of its surface.

Therefore, some studies have conventionally been conducted to enhance not only the slidability of the sliding element but also the wear resistance thereof by forming on the surface of the sliding element a coating of a composition for the sliding element containing fluororesin or other suitable resin as a main constituent.

An example of the solution studied to enhance the wear resistance is a composition for a sliding element composed of fluororesin, a binder and a wear resistant agent (see, for example, Patent Document 1). The composition for a sliding element contains 0.5 to 12% by volume of wear resistant agent having a Mohs hardness of 2.0 to 5.0 per 100% by volume of fluororesin to enhance the wear resistance of the sliding element. Among wear resistant agents having a Mohs hardness of 2.0 to 5.0, calcium fluoride particularly has both mechanical strength and solid lubricity, which can surely enhance the wear resistance of the sliding element.
Patent Document 1: Published Japanese Patent Application No. 2000-249063

### Disclosure of the Invention

### Problem to Be Solved by the Invention

However, the coating in Patent Document 1 is used with a substrate made of an aluminium alloy. Under severe sliding conditions where the substrate or the counterpart is made of an iron-based material, calcium fluoride cannot necessarily exhibit its mechanical strength and provides poor wear resistance.

The present invention has been made in view of the foregoing and, therefore, its object is to provide a composition for a sliding element having excellent slidability and wear resistance, a sliding element including the composition for the sliding element as a coating and a fluid machine with the sliding element.

### Means to Solve the Problem

A first aspect of the invention is directed to a composition for a sliding element containing fluororesin, 100 to 500 parts by weight, both inclusive, of a binder per 100 parts by weight of fluororesin and 70 to 200 parts by weight, both inclusive, of calcium fluoride per 100 parts by weight of fluororesin.

According to the first aspect, since the composition contains fluororesin, the solid lubricity enhances. Furthermore, since the composition contains not less than 70 parts by weight of calcium fluoride per 100 parts by weight of fluororesin, the mechanical strength of calcium fluoride can be used. As a result, even if the substrate or counterpart of a sliding element employing the composition of the invention is made of an iron-based material, the wear resistance of the composition enhances. Furthermore, since the composition contains not less than 100 parts by weight of a binder per 100 parts by weight of fluororesin, the binder increases the binding strength of the composition, which enhances the strength of the composition itself.

Furthermore, since the composition contains not more than 500 parts by weight of a binder and not more than 200 parts by weight of calcium fluoride per 100 parts by weight of fluororesin, the solid lubricity of fluororesin is sufficiently exhibited.

In view of the foregoing, the composition of the invention has both enhanced solid lubricity and enhanced mechanical strength, which enhances the wear resistance.

A second aspect of the invention is directed to the composition of the first aspect, wherein the fluororesin is polytetrafluoroethylene and the binder is polyamide-imide resin.

According to the second aspect, the coefficient of friction of the composition is reduced, thereby further enhancing the mechanical strength.

A third aspect of the invention is directed to the composition of the first or second aspect, wherein the amounts of the binder and calcium fluoride are 300 parts by weight and 100 parts by weight, respectively, per 100 parts by weight of fluororesin.

According to the third aspect, since the amount of calcium fluoride is 100 parts by weight per 100 parts by weight of fluororesin, the solid lubricity of fluororesin and the mechanical strength of calcium fluoride can be surely exhibited. Furthermore, since the amount of the binder is 300 parts by weight with respect to 100 parts by weight of fluororesin and 100 parts by weight of calcium fluoride, the binder increases the binding strength of the composition. As a result, the wear resistance surely enhances.

A fourth aspect of the invention is directed to a sliding element in which a coating is formed on the surface of a metal substrate, and the coating is made of a composition for the sliding element containing fluororesin, 100 to 500 parts by weight, both inclusive, of a binder per 100 parts by weight of fluororesin and 70 to 200 parts by weight, both inclusive, of calcium fluoride per 100 parts by weight of fluororesin.

According to the fourth aspect, since the coating of the composition for the sliding element is formed on the surface of the substrate, the sliding surface enhances the wear resistance.

A fifth aspect of the invention is directed to the sliding element of the fourth aspect, wherein the surface of the substrate is subjected to surface roughening.

According to the fifth aspect, the adhesion property of the substrate surface to the coating of the composition for the sliding element increases.

A sixth aspect of the invention is directed to the sliding element of the fifth aspect, wherein the fluororesin is polytetrafluoroethylene and the binder is polyamide-imide resin.

A seventh aspect is directed to the sliding element of the fifth aspect, wherein the amounts of the binder and calcium fluoride are 300 parts by weight and 100 parts by weight, respectively, per 100 parts by weight of fluororesin.

In other words, the fourth aspect is directed to a sliding element in which a coating is formed on the surface of a metal substrate, and the coating may be made of the composition for a sliding element of any one of the first to third aspects. Furthermore, in the sliding element of the fifth aspect, the coating may be made of the composition for a sliding element of any one of the first to third aspects.

An eighth aspect of the invention is directed to a fluid machine including a sliding element in which a coating is formed on the surface of a metal substrate, and the coating is made of a composition for the sliding element containing fluororesin, 100 to 500 parts by weight, both inclusive, of a binder per 100 parts by weight of fluororesin and 70 to 200 parts by weight, both inclusive, of calcium fluoride per 100 parts by weight of fluororesin.

According to the eighth aspect, the coating on the substrate surface in the fluid machine enhances the wear resistance.

A ninth aspect of the invention is directed to the fluid machine of the eighth aspect, wherein the sliding element is a bearing element.

According to the ninth aspect, the coating on the substrate surface of the bearing element of the fluid machine enhances the wear resistance.

A tenth aspect of the invention is directed to the fluid machine of the ninth aspect, wherein the fluororesin is polytetrafluoroethylene and the binder is polyamide-imide resin.

An eleventh aspect of the invention is directed to the fluid machine of the ninth aspect, wherein the amounts of the binder and calcium fluoride are 300 parts by weight and 100 parts by weight, respectively, per 100 parts by weight of fluororesin.

A twelfth aspect of the invention is directed to the fluid machine of the ninth aspect, wherein the surface of the substrate is subjected to surface roughening.

A thirteenth aspect of the invention is directed to the fluid machine of the twelfth aspect, wherein the fluororesin is polytetrafluoroethylene and the binder is polyamide-imide resin.

A fourteenth aspect of the invention is directed to the fluid machine of the twelfth aspect, wherein the amounts of the binder and calcium fluoride are 300 parts by weight and 100 parts by weight, respectively, per 100 parts by weight of fluororesin.

In other words, the eighth aspect is directed to a fluid machine including a sliding element in which a coating is formed on the surface of a metal substrate, and the coating may be made of the composition for a sliding element of any one of the first to third aspects. Furthermore, in the fluid machines of the ninth and twelfth aspects, the coating may be made of the composition for a sliding element of any one of the first to third aspects.

### Effects of the Invention

Since the composition for a sliding element of the invention contains fluororesin, the solid lubricity enhances. Furthermore, since the composition contains not less than 70 parts by weight of calcium fluoride per 100 parts by weight of fluororesin, the mechanical strength of calcium fluoride can be exhibited. As a result, even if the substrate or counterpart of a sliding element employing the composition of the invention is made of an iron-based material, the wear resistance of the composition can be enhanced.

Furthermore, since the composition contains not less than 100 parts by weight of a binder per 100 parts by weight of fluororesin, the binder increases the binding strength of the composition, which enhances the strength of the entire composition.

Furthermore, since the composition contains not more than 500 parts by weight of a binder and not more than 200 parts by weight of calcium fluoride per 100 parts by weight of fluororesin, the solid lubricity of fluororesin can be sufficiently exhibited.

In view of the foregoing, the composition of the invention has both enhanced solid lubricity and enhanced mechanical strength, which can enhance the wear resistance of the entire composition.

Furthermore, according to the second, sixth, tenth and thirteenth aspects, the coefficient of friction of the composition itself can be reduced, thereby further enhancing the mechanical strength.

Furthermore, according to the third, seventh, eleventh and fourteenth aspects, since the amount of calcium fluoride is 100 parts by weight per 100 parts by weight of fluororesin, the solid lubricity of fluororesin and the mechanical strength of calcium fluoride can be surely exhibited. Furthermore, since the amount of the binder is 300 parts by weight with respect to 100 parts by weight of fluororesin and 100 parts by weight of calcium fluoride, the binder can enhance the binding strength of the composition. As a result, the wear resistance of the entire composition can be surely enhanced.

Furthermore, according to the fourth aspect, since the coating of the composition for the sliding element is formed on the surface of the substrate, the wear resistance of the sliding surface can be enhanced. As a result, the durability of the sliding element itself enhances, which enables long-time use of the sliding element.

Furthermore, according to the fifth and twelfth aspects, the adhesion property of the substrate surface to the coating of the composition for the sliding element increases, which provides an excellent slidability.

Furthermore, according to the eighth aspect, the coating on the substrate surface in the fluid machine enhances the wear resistance, which provides increased reliability of the fluid machine itself.

Furthermore, according to the ninth aspect, the wear resistance of the bearing element enhances, thereby enhancing the reliability of the bearing function.

### Brief Description of the Drawings

[Fig. 1] Figure **1** is a cross-sectional view of a scroll compressor according to an embodiment of the invention.
[Fig. 2] Figure **2** is a schematic diagram illustrating a dry journal bearing test.
[Fig. 3] Figure **3** is a table showing the relations between the constituent fractions of compositions for a sliding element and their wear resistance.

### Explanation of Reference Numerals

- **10**: scroll compressor
- **25**: slide bush
- **26**: cylindrical part of the slide bush
- **50**: movable scroll
- **53**: extension of the movable scroll
- **70**: lubrication part

### Best Mode for Carrying Out the Invention

Hereinafter, an embodiment of the invention will be described in detail with reference to the drawings.

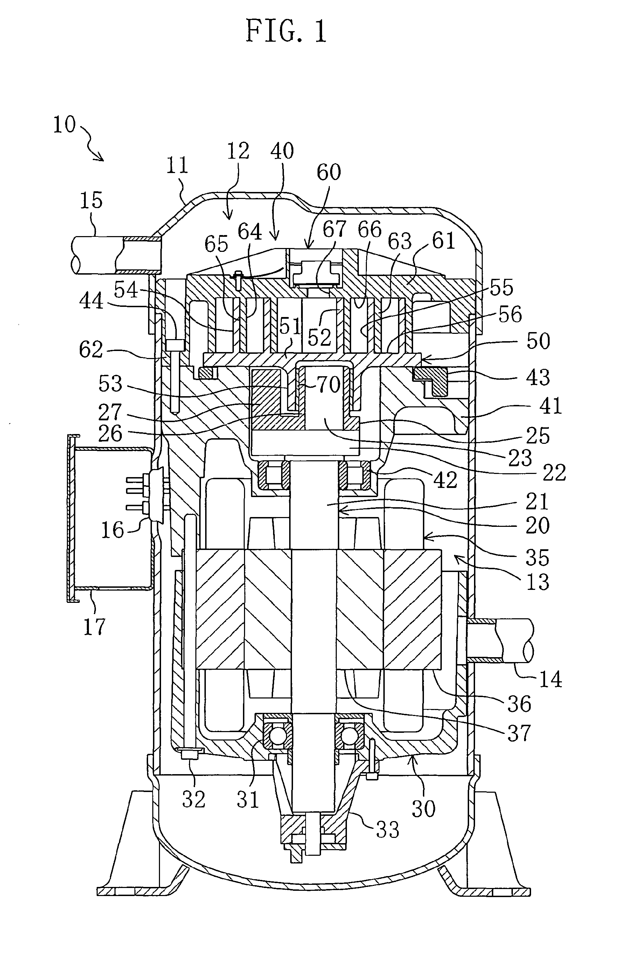

As shown in Figure **1,** a fluid machine according to this embodiment is a scroll compressor **(10).** The scroll compressor **(10)** is disposed in a refrigerant circuit for a refrigeration system and used to compress gas refrigerant which is a fluid.

### «Overall Structure of Scroll Compressor»

The scroll compressor **(10)** is configured to be of so-called fully enclosed type. The scroll compressor **(10)** includes a casing **(11)** formed in the shape of a vertically elongated, cylindrical, airtight container. The casing **(11)** contains a lower bearing unit **(30),** an electric motor **(35)** and a compression mechanism **(40)** which are disposed in order from bottom to top. The casing **(11)** also contains a vertically extending drive shaft (20) provided therein.

The interior of the casing **(11)** is partitioned from top to bottom by a fixed scroll (60) of the compression mechanism **(40).** One of the interior spaces of the casing **(11)** above the fixed scroll **(60)** provides a first chamber **(12)** and the other below the fixed scroll **(60)** provides a second chamber **(13).**

A suction pipe **(14)** is mounted to the body of the casing **(11).** The suction pipe **(14)** opens into the second chamber **(13)** in the casing **(11).** A discharge pipe **(15)** is mounted to the upper end of the casing **(11).** The discharge pipe **(15)** opens into the first chamber **(12)** in the casing **(11).**

The drive shaft **(20)** has a main spindle **(21),** a flange **(22)** and an eccentric part **(23).** The flange **(22)** is formed at the upper end of the main spindle **(21)** and has the shape of a disc having a larger diameter than the main spindle **(21).** The eccentric part **(23)** extends from the top surface of the flange **(22).** The eccentric part **(23)** has the shape of a round column having a smaller diameter than the main spindle **(21)** and its axis is eccentric with respect to the axis of the main spindle **(21).**

The main spindle **(21)** of the drive shaft **(20)** passes through a frame member **(41)** of the compression mechanism **(40).** The main spindle **(21)** is supported through a roller bearing **(42)** to the frame member **(41).** The flange **(22)** and the eccentric part **(23)** of the drive shaft **(20)** is located in the second chamber **(13)** above the frame member **(41).**

A slide bush **(25)** is mounted to the drive shaft **(20).** The slide bush **(25)** includes a cylindrical part **(26)** and a balance weight **(27)** and is disposed on the flange **(22).** The eccentric part **(23)** of the drive shaft **(20)** is rotatably inserted in the cylindrical part **(26)** of the slide bush **(25).**

The lower bearing unit **(30)** is located within the second chamber **(13)** in the casing **(11).** The lower bearing unit **(30)** is fixed to the frame member **(41)** by a bolt **(32).** Furthermore, the lower bearing unit **(30)** supports the main spindle **(21)** of the drive shaft **(20)** through a ball bearing **(31).**

An oil pump **(33)** is mounted to the lower bearing unit **(30).** The oil pump **(33)** engages with the lower end of the drive shaft **(20).** The oil pump **(33)** is driven by the drive shaft **(20)** to suck up refrigerator oil accumulating in the bottom of the casing **(11).** The refrigerator oil sucked up by the oil pump **(33)** is fed through a channel formed inside the drive shaft **(20)** as to the compression mechanism **(40).**

The electric motor **(35)** includes a stator **(36)** and a rotor **(37).** The stator **(36)** is fixed, together with the lower bearing unit **(30),** to the frame member **(41)** by the bolt **(32).** The rotor **(37)** is fixed to the main spindle **(21)** of the drive shaft **(20).**

A terminal **(16)** for power feed is mounted to the body of the casing **(11).** The terminal (16) is covered with a terminal box **(17).** The electric motor **(35)** is fed with electric power through the terminal **(16).**

### «Structure of Compression Mechanism»

The compression mechanism **(40)** includes, in addition to the fixed scroll (60) and the frame member **(41),** a movable scroll **(50)** and an Oldham ring **(43).** The compression mechanism **(40)** is configured into a so-called asymmetric scroll design.

The movable scroll **(50)** includes a movable plate **(51),** a movable wrap **(52)** and an extension **(53).** The movable plate **(51)** is formed in the shape of a thickish disc. The extension **(53)** is integrally formed with the movable plate **(51)** to extend from the bottom surface of the movable plate **(51).** Furthermore, the extension **(53)** is located substantially in the center of the movable plate **(51).** The cylindrical part **(26)** of the slide bush **(25)** is inserted into the extension **(53).** In other words, the movable scroll **(50)** is engaged through the slide bush **(25)** on the eccentric part **(23)** of the drive shaft **(20).**

The movable wrap **(52)** stands up from the top surface of the movable plate **(51)** and is integrally formed with the movable plate **(51).** The movable wrap **(52)** is formed in the shape of a spiral wall having a constant height.

The movable scroll **(50)** is disposed on the frame member **(41)** with the Oldham ring **(43)** interposed therebetween. The Oldham ring **(43)** is formed with two pairs of keys. One of the two pairs of keys of the Oldham ring **(43)** engage with the movable plate **(51)** and the remaining pair of keys engage with the frame member **(41).** The movable scroll **(50),** which is engaged on the eccentric part **(23)** of the drive shaft **(20),** is restricted in terms of rotation on its axis by the Oldham ring **(43)** to bodily move around the drive shaft **(20).** Thus, the Oldham ring **(43)** can slide on the movable scroll **(50)** and the frame member **(41).**

The fixed scroll **(60)** includes a fixed plate **(61),** a fixed wrap **(63)** and a brim **(62).** The fixed plate **(61)** is formed in the shape of a thickish disc. The diameter of the fixed plate **(61)** is approximately equal to the inner diameter of the casing **(11).** The brim **(62)** is formed in the shape of a wall extending downward from the peripheral edge of the fixed plate **(61).** The fixed scroll **(60)** is fixed to the frame member **(41)** by a bolt **(44),** with the lower end of the brim **(62)** abutting on the frame member **(41).** The fixed scroll **(60)** is in close contact at its brim **(62)** with the casing **(11),** thereby partitioning the interior of the casing **(11)** into the first chamber **(12)** and the second chamber **(13).**

The fixed wrap **(63)** stands up from the bottom surface of the fixed plate **(61)** and is integrally formed with the fixed plate **(61).** The fixed wrap **(63)** is formed in the shape of a spiral wall having a constant height and has a length of approximately three helical turns.

An inner wrap face **(64)** and an outer wrap face **(65)** of the fixed wrap **(63),** which are both side faces thereof, slide respectively on an outer wrap face **(54)** and an inner wrap face **(55)** of the movable wrap **(52),** which are both side faces thereof. The bottom surface of the fixed plate **(61),** i.e., a bottom land **(66)** thereof from which the fixed wrap **(63)** does not extend, slides on the end face of the movable wrap **(52).** The top surface of the movable plate **(51),** i.e., a land **(56)** thereof from which the movable wrap **(52)** does not extend, slides on the end face of the fixed wrap **(63).** Furthermore, the fixed plate **(61)** has a discharge port **(67)** formed in the vicinity of the volute center of the fixed wrap **(63).** The discharge port **(67)** passes through the fixed plate **(61)** and opens into the first chamber **(12).**

The scroll compressor **(10)** of this embodiment is disposed in the refrigerant circuit for a refrigerator. The refrigerant circuit operates in a vapor compression refrigeration cycle by circulating refrigerant therethrough. During the operation, the scroll compressor **(10)** sucks low-pressure gas refrigerant from an evaporator, compresses it and feeds out high-pressure gas refrigerant obtained by compression towards a condenser.

When the scroll compressor **(10)** is driven, the cylindrical part **(26)** of the slide bush **(25)** slides on the extension **(53)** of the movable scroll **(50).** In this embodiment, the sliding part is provided with a lubrication part **(70)** serving as a bearing metal. The lubrication part **(70)** is a bearing element of cylindrical shape and also a sliding element in which its substrate is made of iron and the substrate inner periphery is provided with a coating serving as a lubricant layer made of a composition for the sliding element. The inner surface of the lubrication part **(70)** provided with the lubricant layer slides on the outer periphery of the cylindrical part **(26)** of the slide bush **(25).**

The substrate inner periphery of the lubrication part **(70)** is first subjected to surface roughening by conversion treatment to have a surface roughness Ra of 3.7 µm. Then, a lubricant layer of approximately 100 µm thickness is formed on the substrate surface. The lubricant layer is made of a composition for a sliding element containing polyamide-imide resin (hereinafter, referred to as PAI), polytetrafluoroethylene (hereinafter, referred to as PTFE) and calcium fluoride (hereinafter, referred to as CaF2) as a wear resistant agent. Note that here the surface roughness Ra indicates the arithmetic mean height Ra of the surface profile, as defined in JIS B0601-2001. Also in the description below, the expression of "surface roughness Ra" indicates the arithmetic mean height Ra defined in JIS.

The placement of the lubrication part **(70)** having the above features enables the cylindrical part **(26)** of the slide bush **(25)** and the lubrication part **(70)** to continue to slide relative to each other at low coefficient of friction for a very long time even while being exposed to the refrigerant.

### «Study of Sliding Part»

Next, a description is given of a study made on the lubrication part **(70).**

The composition for a sliding element containing fluororesin has a low coefficient of friction with metal and an excellent slidability on metal but exhibits a poor wear resistance to the substrate or counterpart made of iron-based material. Therefore, the Inventors studied whether or not the wear resistance of the coating made of the composition for a sliding element on the surface of the sliding element increased by changing the content of CaF2 which is the wear resistant agent.

The study was made by using PTFE as a fluororesin and PAI as a binder and changing the content of CaF2 in the composition for a sliding element from 10 to 20% by weight and then to 50% by weight.

Specifically, the study was made by using three composition samples for a sliding element of different composition ratios: Sample A of PTFE/PAI/CaF2 = 30/60/10; Sample B of PTFE/PAI/CaF2 = 20/60/20; and Sample C of PTFE/PAI/CaF2 = 15/35/50.

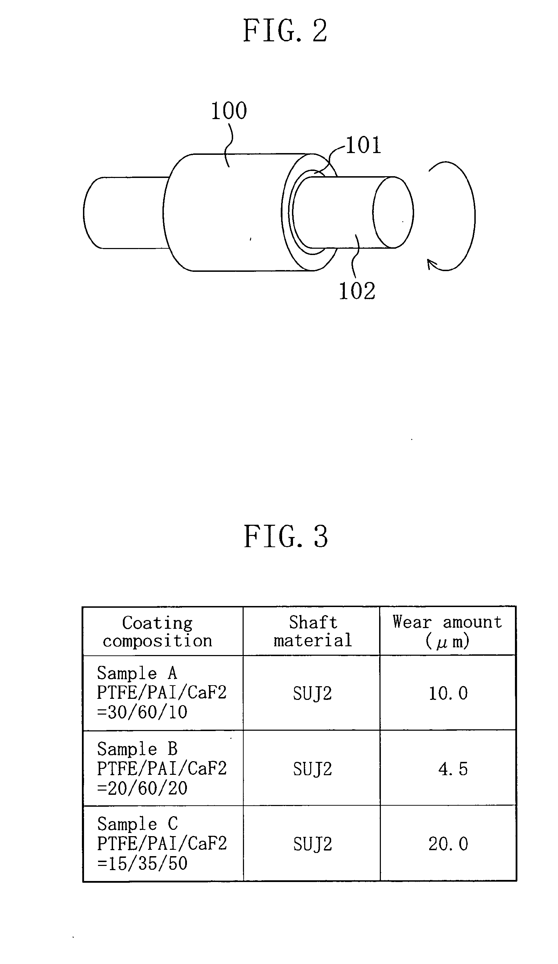

The way of study was carried out according to a dry journal bearing test as shown in Figure **2.** First, three bearings **(100)** made of iron substrates were employed as sliding elements and the cylindrical inner surfaces of the substrates of the bearings **(100)** were subjected to surface roughening by conversion treatment using manganese phosphate to have a surface roughness Ra of 3.7 µm. Then, different coatings **(101)** of the three kinds of compositions for a sliding element were formed as approximately 100 µm-thick lubricant layers on the different bearing substrates. The coatings **(101)** were formed by applying the three kinds of compositions to the bearing substrates, then calcining the substrates and then polishing the substrate surfaces.

Next, a shaft **(102)** made of SUJ2 (according to JIS G4805-1990) was inserted into each of the bearings **(100)** and rotated at a constant velocity. In the test, the sliding speed of the shaft **(102)** on the bearing **(100)** was kept at 1.57 m/s and each bearing **(100)** was fixed and held for an hour with a load of 0.41 MPa imposed thereon. Thereafter, the wear resistance of each of the coatings of different compositions for a sliding element was evaluated by measuring the wear amount of each coating. Note that the test was carried out in the atmosphere without any lubrication oil between the shaft (102) and the bearing (100).

Figure 3 shows the results of the dry journal bearing test. The wear amounts of the three samples were as follows: the wear amount of Sample A containing 10% by weight of CaF2 was 10 µm; the wear amount of Sample B containing 20% by weight of CaF2 was 4.5 µm; and the wear amount of Sample C containing 50% by weight of CaF2 was 20 µm. The results show that Sample B has an excellent wear resistance.

As is evident from the above results, according to this embodiment, Sample B containing 20 parts by weight of CaF2 exhibits a small wear amount in the atmosphere without any lubrication oil. In addition, the substrate of the sliding element is firmly bonded to the coating of the composition for the sliding element owing to surface roughening. Therefore, the sliding element exhibits an excellent slidability and in turn can maintain the sliding at low coefficient of friction for a long time.

If, thus, the sliding element has a coating formed on its substrate surface and made of a composition for the sliding element having a PTFE/PAI/CaF2 composition ratio of 20/60/20, it can exhibit an excellent wear resistance even if the substrate or the counterpart is made of an iron-based material. Therefore, in this embodiment, a coating having a PTFE/PAI/CaF2 composition ratio of 20/60/20 is formed on the inner periphery of the lubrication part **(70).**

### (Other Embodiments)

Composition Sample B for a sliding element according to the above embodiment has a PTFE/PAI/CaF2 composition ratio of 20/60/20, namely, contains PTFE, 300 parts by weight of PAI per 100 parts by weight of PTFE and 100 parts by weight of CaF2 per 100 parts by weight of PTFE.

However, the weight composition ratio of the composition for a sliding element according to the invention is not limited to the above so long as the sliding element can use the solid lubricity of PTFE and the mechanical strength of CaF2 and the composition is firmly bound by PAI serving as a binder. Specifically, it will suffice if the composition for a sliding element according to the invention contains PTFE, 100 to 500 parts by weight, both inclusive, of PAI per 100 parts by weight of PTFE and 70 to 300 parts by weight, both inclusive, of CaF2 per 100 parts by weight of PTFE.

Fluororesins applicable to the invention include, in addition to PTFE, tetrafluoroethylene-hexafluoropropylene copolymer resin but are not limited to these resins. The use of PAI as a binder enhances the impact resistance and wear resistance of the composition for a sliding element because the sliding element can use properties of PAI, an excellent impact resistance and a high hardness. However, binders applicable to the invention include, in addition to PAI, polyamide resins having similar properties but are not limited to these materials.

In the above embodiment, the lubrication part **(70)** is provided as a bearing metal between the cylindrical part **(26)** of the slide bush **(25)** and the extension **(53)** of the movable scroll **(50).** However, instead of provision of the lubrication part **(70)** serving as a bearing metal, the cylindrical inner surface of the extension **(53)** of the movable scroll **(50)** may be roughened by directly subjecting it to conversion treatment and a coating made of composition Sample B for a sliding element according to the above embodiment may be formed directly on the inner surface of the extension **(53).** Alternatively, the coating may be formed directly on the outer periphery of the cylindrical part **(26)** of the slide bush **(25).**

The composition Sample B for a sliding element according to the above embodiment is not applied only to the sliding part between the cylindrical part **(26)** of the slide bush **(25)** and the extension **(53)** of the movable scroll **(50)** but can be coated on various types of sliding elements for various purposes to provide the same effects.

Specifically, the bottom surface of the movable plate **(51)** of the movable scroll **(50)** slides on the top surfaces of the frame member **(41)** and the Oldham ring **(43).** Therefore, a coating made of composition Sample B for a sliding element according to the above embodiment may be formed on the bottom surface of the movable plate **(51)** of the movable scroll **(50).** Alternatively, the coating may be formed on the entire surface of the movable scroll **(50).**

Alternatively, since the movable scroll **(50)** and the fixed scroll **(60)** slide at their opposed faces on each other, a coating made of composition Sample B for a sliding element according to the above embodiment may be formed on the inner wrap face **(55),** the outer wrap face **(54)** and the end face of the movable wrap **(52)** of the movable scroll **(50).** Alternatively, the coating may be formed on the opposed faces of the fixed wrap **(63)** of the fixed scroll **(60)** to the movable scroll **(50),** i.e., the inner wrap face **(64),** the outer wrap face **(65)** and the end face of the fixed wrap **(63).** Thus, the opposed faces of the movable scroll **(50)** and the fixed scroll **(60)** enhance their sealing properties, which enhances the reliability of the compressor.

Furthermore, the Oldham ring **(43)** slides on the bottom surface of the movable plate **(51)** of the movable scroll **(50),** while the body and the other key of the Oldham ring **(43)** slides on the frame member **(41).** Therefore, a coating made of composition Sample B for a sliding element according to the above embodiment may be formed on the surface of the Oldham ring **(43).** In the above embodiment, the movable scroll **(50)** is disposed on the frame member **(41)** with the Oldham ring **(43)** interposed therebetween. If the movable scroll **(50)** is disposed on the frame member **(41)** with the Oldham ring **(43)** and a thrust bearing interposed therebetween, the bottom surface of the movable plate **(51)** of the movable scroll **(50)** slides on the top surface of the thrust bearing. Therefore, in this case, the coating may be formed on the top surface of the thrust bearing.

Although in the above embodiment the main spindle **(21)** is supported through the roller bearing **(42)** and the ball bearing **(31)** serving as sliding parts, the main spindle **(21)** may be supported through journal bearings serving as sliding bearings. In this case, a coating made of composition Sample B for a sliding element according to the above embodiment may be formed on the sliding parts between the main spindle **(21)** and the bearings. In other words, the coating may be formed on the outer periphery of the main spindle **(21)** or the inner periphery of each bearing.

In the above embodiment, a coating made of composition Sample B for a sliding element according to the above embodiment is formed on the sliding element in the scroll compressor **(10).** However, the compressor is not limited to the scroll type and may be of any type that compresses a fluid. Furthermore, the fluid is not limited to refrigerant. Furthermore, sliding elements according to the invention are not limited to those used in compressors. Specifically, sliding elements according to the invention may be those in any fluid machines other than compressors or those in any sliding parts, such as drive units or rotating parts in vehicles or manufacturing apparatuses.

In forming a coating made of composition Sample B for a sliding element according to the above embodiment on the sliding part, the coating may be formed on one of two elements sliding relative to each other or both the two elements.

The method for surface roughening of the substrate is not limited to conversion treatment and various known surface roughening processes, such as sand blasting, can be employed. The chemical agent used for conversion treatment is not limited to manganese phosphate and other phosphates or known chemical agents can be employed.

The coating of the composition for a sliding element may contain, in addition to the main component composed of fluororesin, a binder and CaF2, a pigment serving as a colorant, such as carbon, or other additives. The amount of additives is selected to such a value that does not adversely affect the performance of the coating containing the composition for a sliding element, such as the wear resistance and the adhesion property to the substrate. For example, carbon serving as an additive should be selected to not larger than 3% by mass of fluororesin, preferably not larger than 1% by mass thereof and more preferably not larger than 0.5% by mass thereof.

The thickness of the coating of the composition for a sliding element is preferably 35 µm to 120 µm both inclusive. If the thickness is smaller than 35 µm, the sliding performance might be deteriorated. If the thickness is larger than 120 µm, the production cost will be high. Therefore, in consideration of aspects of the sliding performance and the cost, the thickness of the coating is preferably 50 µm to 105 µm both inclusive. Note that the reference to the thickness of the coating is made as representative of the average thickness but the coating may locally have thicknesses other than the above range.

Note that the above embodiment is merely illustrative in nature and is not intended to limit the scope, applications and use of the invention.

### Industrial Applicability

As described so far, the composition for a sliding element according to the invention has excellent wear resistance and, therefore, is useful for a coating for various sliding elements in various air conditioners, vehicles and machine tools. Furthermore, the sliding element including the coating and the fluid machine with the sliding element are useful as a sliding element and a fluid machine, respectively, in various air conditioners, vehicles and machine tools.

## Claims

1. A composition for a sliding element containing fluororesin, 100 to 500 parts by weight, both inclusive, of a binder per 100 parts by weight of fluororesin and 70 to 200 parts by weight, both inclusive, of calcium fluoride per 100 parts by weight of fluororesin.

2. The composition for a sliding element of claim 1, wherein
the fluororesin is polytetrafluoroethylene, and
the binder is polyamide-imide resin.

3. The composition for a sliding element of claim 1, wherein the amounts of the binder and calcium fluoride are 300 parts by weight and 100 parts by weight, respectively, per 100 parts by weight of fluororesin.

4. A sliding element in which a coating is formed on the surface of a metal substrate, wherein the coating is made of a composition for the sliding element containing fluororesin, 100 to 500 parts by weight, both inclusive, of a binder per 100 parts by weight of fluororesin and 70 to 200 parts by weight, both inclusive, of calcium fluoride per 100 parts by weight of fluororesin.

5. The sliding element of claim 4, wherein the surface of the substrate is subjected to surface roughening.

6. The sliding element of claim 5, wherein
the fluororesin is polytetrafluoroethylene, and
the binder is polyamide-imide resin.

7. The sliding element of claim 5, wherein the amounts of the binder and calcium fluoride are 300 parts by weight and 100 parts by weight, respectively, per 100 parts by weight of fluororesin.

8. A fluid machine including a sliding element in which a coating is formed on the surface of a metal substrate, wherein the coating is made of a composition for the sliding element containing fluororesin, 100 to 500 parts by weight, both inclusive, of a binder per 100 parts by weight of fluororesin and 70 to 200 parts by weight, both inclusive, of calcium fluoride per 100 parts by weight of fluororesin.

9. The fluid machine of claim 8, wherein the sliding element is a bearing element.

10. The fluid machine of claim 9, wherein
the fluororesin is polytetrafluoroethylene, and
the binder is polyamide-imide resin.

11. The fluid machine of claim 9, wherein the amounts of the binder and calcium fluoride are 300 parts by weight and 100 parts by weight, respectively, per 100 parts by weight of fluororesin.

12. The fluid machine of claim 9, wherein the surface of the substrate is subjected to surface roughening.

13. The fluid machine of claim 12, wherein
the fluororesin is polytetrafluoroethylene, and
the binder is polyamide-imide resin.

14. The fluid machine of claim 12, wherein the amounts of the binder and calcium fluoride are 300 parts by weight and 100 parts by weight, respectively, per 100 parts by weight of fluororesin.
